# EUROPÄISCHE PATENTSCHRIFT

(11) **EP 4 088 985 B1**
(45) Veröffentlichungstag und Bekanntmachung des Hinweises auf die Patenterteilung: **27.08.2025**
(21) Anmeldenummer: 22171988.3
(22) Anmeldetag: 06.05.2022
(51) Int. Cl.: B62B 7/00, B62B 7/06, B62B 7/14, B62B 9/12

(54) **KINDER- ODER PUPPENWAGEN**
BABY OR DOLL CARRIAGE
VOITURE D'ENFANT OU DE POUPÉE

(30) Priorität: 11.05.2021 DE 102021112281
(43) Veröffentlichungstag der Anmeldung: 16.11.2022
(73) Patentinhaber: Beger, Oliver, 84030 Ergolding (DE)
(72) Erfinder: Beger, Udo, 84034 Landshut (DE)
(74) Vertreter: Pröll, Jürgen

(56) Entgegenhaltungen:
- WO-A1-2017/219036
- GB-A- 2 193 692
- US-B2- 8 899 615
- US-B2- 8 905 427

## Beschreibung

Die vorliegende Erfindung betrifft einen Kinder- oder Puppenwagen mit den Merkmalen des Oberbegriffs des Patentanspruchs 1, wobei der Kinder- oder Puppenwagen in seiner Breite veränderlich ausgebildet ist.

### Hintergrund

Herkömmliche Kinder- oder Puppenwagen sind in ihrer Breite üblicherweise festgelegt und üblicherweise unveränderlich ausgebildet. Hierbei handelt es sich stets entweder um Einzelwagen für ein Kind bzw. eine Puppe oder um Zwillingswagen. Das Gestell der Kinder- oder Puppenwagen ist entsprechend breit ausgebildet und weist Aufnahmen für entweder einen Einsatz oder im Falle eines Zwillingswagens für zwei Einsätze auf. Eine Erweiterung eines Einzelwagens in einen Zwillingswagen kann unter Umständen erforderlich sein, bspw. durch hinzukommenden Familiennachwuchs. Umkehrt kann es auch erforderlich sein, aus einem Zwillingswagen einen Einzelwagen zu machen, z.B. wenn ein Kind für den Kinderwagen ausgewachsen ist. Eine Anpassung des Kinder- oder Puppenwagens ist zumeist nicht möglich. Den beschriebenen, veränderten Umständen kann daher bislang nur durch den Kauf eines Einzel- bzw. Zwillingswagen beigekommen werden. Dies stellt jedoch eine unnötige finanzielle Belastung dar und ist auch im Hinblick auf den dafür aufgebrachten Ressourceneinsatz nicht nachhaltig.

### Stand der Technik

Aus der WO 2010/047596 A2 ist ein Buggy zum Transportieren von Kindern bekannt, der einen Rahmen mit ersten Befestigungselementen zum lösbaren Befestigen einer ersten Last aufweist. Hierzu weist die erste Last eine erste Haltevorrichtung zur Aufnahme eines Kindes auf. Weiterhin ist der Rahmen mit zweiten Befestigungselementen zum lösbaren Befestigen einer zweiten Last versehen. Die Breite des Rahmens des Buggys ist zwischen einer ersten, relativ kleinen Rahmenbreite und einer zweiten, relativ große Rahmenbreite einstellbar. Die zweiten Befestigungselemente sind derart konfiguriert, dass diese sowohl in der ersten Rahmenbreite als auch in der zweiten Rahmenbreite zum lösbaren Befestigen der zweiten Last neben der ersten Last verwendbar sind. Nachteilig hierbei ist, dass die Breite des Rahmens von dem Buggy nur aufwändig veränderbar ist. Dabei ist der Rahmen mechanisch nicht auf exakt auf zwei Breiten einstellbar, so wie es für die Konfiguration von Einzelwagen und Zwillingswagen erforderlich wäre.

Aus der US 2002/0070531 A1 ist ein Joggingkinderwagen bekannt, der von einer Einzelsitzeinheit zu einer Doppelsitzeinheit erweiterbar ist. Der Joggingkinderwagen weist eine U-förmige Lenkerstangenanordnung mit einem Greifbereich mit einer darin befindlichen Trennfuge zum Öffnen und Auseinanderspreizen der Lenkerstange, einen Lenkerstangeneinsatz, der innerhalb der Trennfuge des Greifbereichs angeordnet ist, um eine breitere Lenkerstangenanordnung zur Aufnahme eines zusätzlichen Sitzes zu schaffen, auf. Weiterhin ist eine Hinterachsanordnung mit einer Achse mit gegenüberliegenden Enden vorhanden, wobei jedes Ende einen großen Luftreifen trägt und die Achse eine Trennfuge zum Öffnen und Auseinanderspreizen der Achse aufweist. Weiterhin ist ein Achseneinsatz vorhanden, der innerhalb der Trennfuge der Achse angeordnet ist, um eine breitere Hinterachsachsanordnung zu schaffen. Außerdem sind entsprechende Mittel zum Verbinden der Lenkerstangenanordnung mit der Hinterachsanordnung vorhanden. Außerdem weist der Joggingkinderwagen eine Vorderradanordnung auf, welche aus einem Vorderradrahmen, einem Gehäuse mit einer vorderen Endhülse, Mitteln zum Verbinden der Lenkerstangenanordnung mit der Vorderradanordnung und Mitteln zum Verbinden der Hinterachsanordnung mit der Vorderradanordnung besteht. Es ist eine Mittelstange mit einem rumpfwärts gelegenen Ende vorgesehen, welche mit dem Lenkerstangeneinsatz verbunden ist, und ein distales Ende, das mit der vorderen Endhülse des Gehäuses verbunden ist, um eine strukturelle Längsunterstützung für den Joggingkinderwagen bereitzustellen, wenn sich der Joggingkinderwagen im Doppelsitzmodus befindet. Schließlich ist ein Verstrebungselement vorhanden, dessen unteres Ende mit dem Achseneinsatz und dessen oberes Ende mit dem Lenkstangeneinsatz reibschlüssig verbunden ist, um eine vertikale Abstützung für den Kinderwagen im Zweisitzmodus bereitzustellen. Auch hier ist nachteilig, dass die Verstellung der Breite mechanisch anspruchsvoll gestaltet ist und nicht ohne Weiteres mit einem Handgriff erfolgen kann. Des Weiteren sind keine festen Breiten vordefiniert, sodass auch Breiten eingestellt werden können, die unvorteilhaft weder einen Einzel- noch einen Zwillingswagen ausbilden.

Aus der WO 2001/024759 A1 ist eine Gehhilfe für Personen mit eingeschränkter Gehfähigkeit bekannt, die ein erstes und ein zweites Seitenteil aufweist. Die beiden Seitenteile sind über an den zwei Seitenteilen angebrachte Querstangen verbunden, wobei die Querstangen relativ zueinander parallel bewegt werden können und so eine Einstellung des Abstands zwischen dem ersten Seitenteil und dem zweiten Seitenteil ermöglicht wird, sodass die Breite der Gehhilfe variierbar ist. Die Gehhilfe weist zusätzlich Räder und Griffstangen auf. Die Querstangen werden unter Verwendung einer durch ein Zahnrad mit einem Handgriffhebel gebildete Einstelleinrichtung gegenseitig bewegt, wobei die Einstelleinrichtung an wenigstens einer Stange an dem zweiten Seitenteil angeordnet ist. Das Zahnrad greift in Zähne ein, die an der Querstange an dem ersten Seitenteil angeordnet sind, und welche mit der Querstange mit dem Zahnrad verbunden ist. Nachteilig bei diesem Stand der Technik ist, dass lediglich eine Mechanik zur Verbreiterung angegeben ist, wobei die technische Lehre nicht ausreicht, um einen Kinder- oder Puppenwagen zu beschreiben, der in seiner Breite variierbar ist, sodass er sowohl als Einzelwagen als auch als Zwillingswagen verwendbar ist.

In der Druckschrift GB 2 193 692 A wird ein Einzel-/Doppelsitz-Kinderwagen offenbart, der von einem einsitzigen in einen zweisitzigen Wagen umgewandelt werden kann, indem Teleskopstreben, z.B. reibungsarme Gleitstreben, Gas- oder Druckfederstreben, ausgefahren und ein geeigneter abnehmbarer Sicherheitssitz oder eine Tragewanne angebracht werden. Klappbare Verbindungselemente an jeder Seite des Wagens ermöglichen es, den Wagen flach zusammenzulegen.

Die US 8 905 427 B2 beschreibt einen umwandelbaren ein- und mehrsitzigen Kinderwagen, wobei dieser wenigstens ein Fahrgestell umfasst. Das Fahrgestell wiederum umfasst eine Stützeinheit zum Tragen mindestens einer Person, typischerweise eines Kleinkindes, eine mit der Stützeinheit gekoppelte Radanordnung, ein Eingriffselement zum Verbinden des Fahrgestells mit einem anderen derartigen Fahrgestell und ein mit der Stützeinheit gekoppeltes Schwenkelement, das ein Drehen der Stützeinheit in Bezug auf das Fahrgestell ermöglicht. Die Trageinheit kann drehbar neu ausgerichtet werden, um den Transport des Fahrgestells zu ermöglichen, so dass die Trageinheit des Fahrgestells und die andere Trageinheit des anderen Fahrgestells in einem Zugzustand oder alternativ in einem Nebeneinanderzustand ausgerichtet werden können.

### Aufgabe

Es ist daher Aufgabe der vorliegenden Erfindung einen Kinder- oder Puppenwagen bereitzustellen, welcher in seiner Breite veränderbar ausgebildet ist, sodass der Kinder- oder Puppenwagen entsprechend seiner Verwendung als Einzel- oder Zwillingswagen angepasst werden kann.

### Lösung

Die vorstehende Aufgabe wird mit den Merkmalen des kennzeichnenden Teils des Patentanspruchs 1 gelöst.

Weitere vorteilhafte Ausgestaltungen der Erfindung sind in den auf den Patentanspruch 1 rückbezogenen Patentansprüchen angegeben.

Der Gegenstand der nachfolgend beschrieben Erfindung ist sowohl auf Kinderwagen als auch auf Puppenwagen anwendbar. Aus diesem Grund sind beide Begriffe synonym zueinander auslegebar. Das Gleiche gilt ebenfalls, wenn nur allgemein ein Wagen, statt ein Kinder- oder Puppenwagen genannt ist.

Die vorliegende Erfindung beschreibt einen Kinder- oder Puppenwagen aufweisend ein Wagengestell bestehend aus mehreren Längs- und Querholmen und wenigstens einer längenveränderlichen Querverbindung, mittels welcher die Breite des Wagengestells variierbar ist. Des Weiteren ist vorgesehen, dass die wenigstens eine längenveränderliche Querverbindung wenigstens zwei Adapteraufnahmen zum lösbaren Befestigen eines Einsatzes aufweist, wobei die wenigstens eine längenveränderliche Querverbindung wenigstens einen Mechanismus zur Längenveränderung der längenveränderlichen Querverbindung aufweist. Der Einsatz ist als ein Kinder- oder Puppenwageneinsatz ausgebildet, in welchen ein Kind oder eine Puppe hineingelegt oder -gesetzt werden kann.

Soweit nachfolgend von Zwillingswagen gesprochen wird, so sind Kinder- oder Puppenwagen hierunter zu verstehen, bei denen die Kinder oder Puppen nebeneinander im Kinder- oder Puppenwagen liegen oder sitzen. Hierbei können die Kinder oder Puppen jeweils in einem einzelnen Einsatz sitzen oder liegen, es ist aber auch denkbar, dass beide in einem verbreiterten Einsatz Platz finden.

Im Folgenden werden vorteilhafte Ausgestaltungen des Kinder- oder Puppenwagens beschrieben. Sie sind als alternative Ausführungsformen zu verstehen, die für sich oder in Kombination miteinander Anwendung finden können.

Der Abstand der wenigstens zwei Adapteraufnahmen zueinander lässt sich gemeinsam mit der Verbreiterung des Wagengestells des Kinder- oder Puppenwagens über die wenigstens eine längenveränderliche Querverbindung variieren. Hierbei ist es vorteilhaft entsprechend einen in seiner Breite variierbaren Einsatz zur Aufnahme eines Kindes oder einer Puppe vorzusehen, welcher lösbar an den wenigstens zwei Adapteraufnahmen befestigbar ist. So ist es möglich den Kinder- oder Puppenwagen an das darin aufgenommene Kind bzw. an die darin aufgenommene Puppe anzupassen. Weiterhin ist es vorteilhaft, den Kinder- oder Puppenwagen in seiner Breite zu verringern, bspw. wenn dieser platzsparend geparkt werden soll oder unter beengten Verhältnissen in Fahrzeugen transportiert werden soll. Umgekehrt lässt sich der Kinder- oder Puppenwagen verbreitern, sofern es die Platzverhältnisse zulassen.

Es ist denkbar, dass der Kinder- oder Puppenwagen insgesamt vier Adapteraufnahmen aufweist. In dieser denkbaren Ausführung können zwei Einsätze an dem Kinder- oder Puppenwagen angeordnet werden, sodass ein Zwillingswagen ausgebildet wird. Jeweils zwei Adapteraufnahmen nehmen hierbei jeweils einen Einsatz auf. Die Einsätze sind vorteilhaft nebeneinander, entlang der längenveränderlichen Querverbindung angeordnet. Als Zwillingswagen überschreitet der Kinder- oder Puppenwagen vorteilhaft nicht die Breite von 80 cm, womit diese Breite gleichzeitig die maximale Breite des Kinder- oder Puppenwagens ist. Hintergrund dieses Maßes ist, dass die lichte Durchgangsbreite bei Türen in öffentlichen Gebäude aus Sicherheitsgründen 80 cm nicht unterschreiten darf. Des Weiteren sind übliche Türbreiten 60 cm, 80 cm und 100 cm, wobei 80 cm am geläufigsten ist. Somit ist gewährleistet, dass der hier beschriebene Kinder- oder Puppenwagen in jedem Fall durch eine Tür mit einer Mindestbreite von 80° cm gefahren werden kann.

In einer vorteilhaften Ausgestaltung des Kinder- oder Puppenwagens nach Patentanspruch 2 ist vorgesehen, dass der wenigstens eine Mechanismus an der wenigstens einen längenveränderlichen Querverbindung ein Scherenmechanismus ist. Der Scherenmechanismus ist dazu ausgebildet, die wenigstens eine längenveränderliche Querverbindung je nach Betätigung auseinander- oder zusammenzuschieben. Durch Betätigung des Scherenmechanismus wird der Kinder- oder Puppenwagen über die längenveränderliche Querverbindung in seiner Breite verändert. Der Scherenmechanismus ist vorteilhaft mit einer Hand bedienbar, in dem bei der Bedienung nur ein Hebel, welcher Teil des Scherenmechanismus ist, umgelegt werden muss. Hierdurch wird eine besonders einfache und intuitive Bedienung des Scherenmechanismus gewährleistet. Ein Benutzter ist somit in der Lage, ohne großen technischen Sachverstand die Breite des Kinder- oder Puppenwagens zu verändern.

Der Scherenmechanismus weist in einer weiteren vorteilhaften Ausgestaltung zwei Hebel auf, einen ersten und einen zweiten Hebel. Hierbei ist weiterhin denkbar, dass der erste Hebel länger ausgebildet ist als der zweite Hebel. Der zweite Hebel ist mit einem Ende am ersten Hebel angelenkt, d.h. gelenkig befestigt. Der Anlenkungspunkt ist hierbei beabstandet zu den zwei Enden des ersten Hebels angeordnet. Das gegenüberliegende Ende des zweiten Hebels ist an der wenigstens einen längenveränderlichen Querverbindung angelenkt. Ein Ende des ersten Hebels ist ebenfalls an der wenigstens einen längenveränderlichen Querverbindung angelenkt. Vorteilhaft sind die beiden Enden des ersten und des zweiten Hebels, die an der wenigstens einen längenveränderlichen Querverbindung angelenkt sind, an zwei zueinander bewegbaren Komponenten der wenigstens einen längenveränderlichen Querverbindung angeordnet.

Das Ende des ersten Hebels, welches dem angelenkten Ende an der wenigstens einen längenveränderlichen Querverbindung gegenüberliegt, ist per Hand um den Anlenkungspunkt an der wenigstens einen längenveränderlichen Querverbindung umlegbar. Mit Umlegen des ersten Hebels öffnet oder schließt sich der Scherenmechanismus, wobei die an der wenigstens einen längenveränderlichen Querverbindung angelenkten Enden des ersten und des zweiten Hebels auseinanderbewegt oder aufeinanderzubewegt werden. Dabei wird gleichzeitig die Länge der wenigstens einen längenveränderlichen Querverbindung vergrößert bzw. verkleinert. Durch Umlegen des ersten Hebels kann somit die Breite des Kinder- oder Puppenwagens über die wenigstens eine längenveränderliche Querverbindung, die mit dem Scherenmechanismus wirkverbunden ist, vergrößert bzw. verkleinert werden. Vorteilhaft ist hierfür nur ein Handgriff notwendig.

Der Scherenmechanismus ist in einer weiteren vorteilhaften Ausgestaltung unterhalb der wenigstens einen längenveränderlichen Querverbindung angeordnet. Es ist aber auch denkbar, dass der Scherenmechanismus seitlich an der wenigstens einen längenveränderlichen Querverbindung angeordnet ist. Vorteilhaft ist sie hierbei der Person, die den Kinder- oder Puppenwagen schieben soll, zugewandt.

Es ist vorgesehen, dass die wenigstens eine längenveränderliche Querverbindung teleskopartig bestehend aus wenigstens zwei Außenteilen und wenigstens einem Mittelteil ausgebildet ist, wobei zwischen den wenigstens zwei Außenteilen das wenigstens eine Mittelteil zumindest teilweise aufgenommen ist.

Die Außenteile sind vorteilhaft als Hohlprofile, besonders vorteilhaft als Rohre ausgebildet, die wiederum das wenigstens eine Mittelteil aufnehmen, sodass eine teleskopartige Anordnung ausgebildet ist. Das wenigstens eine Mittelteil kann hierbei ebenfalls als Hohlprofil oder aber auch als Vollprofil ausgebildet sein. In der einfachsten Ausführung ist die wenigstens eine längenveränderliche Querverbindung aus zwei Außenteilen und einem Mittelteil ausgebildet. Die Profilform der Hohl- oder Vollprofile kann rund, oval oder eckig ausgebildet sein, wobei eckig dreieckige, rechteckige, quadratische oder aber auch vieleckige Profilformen umfasst.

Die wenigstens zwei Außenteile und das wenigstens eine Mittelteil sind aus Metall, vorteilhaft aus Leichtmetall wie bspw. Aluminium, Titan oder eine entsprechende Leichtmetalllegierung hieraus ausgebildet. Es ist ebenfalls denkbar, dass die wenigstens zwei Außenteile und das wenigstens eine Mittelteil aus Kunststoff oder einem faserverstärktem Verbundwerkstoff ausgebildet sind. Die genannte Auswahl an Werkstoffen ist nicht einschränkend zu verstehen. Des Weiteren ist es ebenfalls denkbar, die Werkstoffe miteinander zu kombinieren. Außenteile sowie das wenigstens eine Mittelteil müssen nicht zwangsläufig aus demselben Werkstoff ausgebildet sein.

In einer weiteren, vorteilhaften Ausgestaltung sind die beiden Enden des ersten und des zweiten Hebels, die an der wenigstens einen längenveränderlichen Querverbindung angelenkt sind, an jeweils an einem der wenigstens zwei Außenteile angelenkt.

Diese beiden Außenteile können als zwei zueinander bewegbare Komponenten verstanden werden. Wird der Scherenmechanismus geöffnet, bewegen sich die Enden der beiden Hebel auseinander, wobei ebenfalls die beiden Außenteile, an denen die beiden Hebel - erster und zweiter Hebel des Scherenmechanismus - jeweils angelenkt sind, auseinandergeschoben. Umgekehrt werden die genannten zwei Außenteile zusammengeschoben, wenn der Scherenmechanismus geschlossen wird und sich die Enden der beiden Hebel aufeinander zubewegen.

Es ist weiterhin denkbar, dass an den beiden äußeren Enden des wenigstens einen Mittelteils jeweils ein Federelement angeordnet ist, welches gleichzeitig von den wenigstens zwei Außenteilen aufgenommen ist. So ist durch die wenigstens zwei Federelemente auf beiden Seiten des einen Mittelteils eine symmetrische, beidseitige Kraftbeaufschlagung auf das wenigstens eine Mittelteil bewirkbar. Dadurch ist das wenigstens eine Mittelteil vor, während und nach dem Zusammen- oder Auseinanderschieben der teleskopartig ausgebildeten längenveränderlichen Querverbindung stets mittig zwischen den wenigstens zwei Außenteilen angeordnet.

In einer weiteren vorteilhaften Ausgestaltung des Kinder- oder Puppenwagens ist vorgesehen, dass die wenigstens zwei Adapteraufnahmen an dem wenigstens einem Mittelteil und/oder jeweils an wenigstens einem Außenteil angeordnet sind.

Bei der Anordnung der Adapteraufnahmen an den Außenteilen sind die Adapteraufnahmen in einem möglichst weiten Abstand zueinander angeordnet. Das heißt, dass die Adapteraufnahmen an den sich gegenüberliegenden äußeren Enden der Außenteile oder zumindest in diesem Bereich, nahe der äußeren Enden angeordnet sind.

In einer Ausführungsform mit vier Adapteraufnahmen sind zwei Adapteraufnahmen, wie oben beschrieben, an den Außenteilen angeordnet und zwei Adapteraufnahmen mittig am wenigstens einen Mittelteil der wenigstens einen längenveränderlichen Querverbindung angeordnet. Hierbei sind jeweils ein Adapteraufnahmen am Außenteil und ein Adapteraufnahmen am Mittelteil geeignet, über entsprechende Adapter einen Einsatz für einen Kinder- oder Puppenwagen aufzunehmen. In der Ausführungsform mit vier Adapteraufnahmen lassen sich zwei Einsätze nebeneinander anordnen. Hierdurch lässt sich vorteilhaft ein Zwillingswagen ausbilden.

In einer weiteren vorteilhaften Ausgestaltung des Kinder- oder Puppenwagens ist vorgesehen, dass die wenigstens eine längenveränderliche Querverbindung in wenigstens zwei Positionen arretierbar ausgebildet ist, wobei die erste Position eine Grundposition und die zweite Position eine gegenüber der Grundposition verbreiterte Spreizposition ist.

Der Kinder- oder Puppenwagen kann hierdurch zwei unterschiedliche Breiten annehmen. In der Spreizposition überschreitet vorteilhafterweise der Kinder- oder Puppenwagen bzw. das Wagengestell des Kinder- oder Puppenwagens eine Gesamtbreite von 80 cm nicht. Damit ist sichergestellt, dass der verbreiterte Kinder- oder Puppenwagen durch die meisten Türen hindurchpasst.

Die Arretierung ist hierbei durch den Scherenmechanismus vorgegeben. Dieser weist hierfür zwei Anschlagpunkte auf, die den Scherenmechanismus in seiner mechanischen Bewegungsfreiheit begrenzen. Sowohl in der Grundposition als auch in der Spreizposition sind die Anlenkungspunkte zwischen der wenigstens einen längenveränderlichen Querverbindung und dem Scherenmechanismus entlang einer gedachten Geraden angeordnet. Die gedachte Gerade verläuft parallel zur Längserstreckung der wenigstens einen längenveränderlichen Querverbindung. Diese Anordnung der Anlenkungspunkte wird erreicht, wenn der Scherenmechanismus maximal geöffnet oder maximal geschlossen ist. Dabei ist der Scherenmechanismus in diesen beiden Positionen vorteilhaft in seiner Bewegungsfreiheit begrenzt, sodass dieser über diese Positionen hinaus nicht bewegt werden kann. Erreicht wird dies durch zwei Anschlagpunkte.

Die Anschlagpunkte sind an den Hebeln des Scherenmechanismus und/oder an der wenigstens einen längenveränderlichen Querverbindung angeordnet. In der Grundposition, wenn der Scherenmechanismus maximal geschlossen ist, schlägt einer der beiden Hebel an einen ersten Anschlagpunkt an. In der Spreizposition, wenn der Scherenmechanismus maximal geöffnet ist, schlägt einer der beiden Hebel an einen zweiten Anschlagpunkt an.

In einer weiteren vorteilhaften Ausgestaltung des Kinder- oder Puppenwagens ist vorgesehen, dass die wenigstens zwei Adapteraufnahmen um die Längsachse der wenigstens einen längenveränderbaren Querverbindung herum schwenkbar und/oder entlang der Längsachse der wenigstens einen längenveränderbaren Querverbindung verschiebbar ausgebildet sind.

In der Ausführungsform mit vier Adapteraufnahmen sind wenigstens die beiden mittleren Adapteraufnahmen, die an dem wenigstens einen Mittelteil angeordnet sind, schwenkbeweglich ausgebildet. Die Schwenkbewegung kann gemeinsam mit dem wenigsten einen Mittelteil ausgeführt werden. Es ist aber auch denkbar, dass die Schwenkbewegung von dem wenigstens einen Mittelteil entkoppelt ist. In beiden Fällen ist die Schwenkachse gleichzeitig die Mittelachse bzw. die Rotationsachse des wenigstens einen Mittelteils entlang seiner Längserstreckung. Um diese Achse werden wenigstens die beiden mittleren Adapteraufnahmen herumgeschwenkt.

Die Schwenkbewegung weist einen Verschwenkungswinkel von 0° bis 180°, vorteilhaft von 0° bis 90° auf. Hierbei werden die beiden mittleren Adapteraufnahmen von einer senkrechten Ausrichtung, bei der sie sich von dem wenigstens einen Mittelteil senkrecht nach oben hin erstrecken, wenigstens um 90 in eine horizontale Ausrichtung verschwenkt. Es ist jedoch auch denkbar, dass die beiden mittleren Adapteraufnahmen um mehr als 90° bis zu maximal 180 senkrecht nach unten verschwenkt werden.

Für eine von dem wenigstens einen Mittelteil entkoppelte Schwenkbewegung ist denkbar, dass die beiden mittleren Adapteraufnahmen von wenigstens einer Muffe gehalten werden, die die beiden mittleren Adapteraufnahmen mit dem wenigstens einen Mittelteil verbinden. Die Adapteraufnahmen sind dabei über die wenigstens eine Muffe schwenkbar ausgebildet. Im einfachsten Fall ist die wenigstens eine Muffe als zwei ineinanderliegende Ringe ausgebildet, die zueinander verschieblich ausgebildet sind, wobei ein Ring mit dem wenigstens einen Mittelteil und der andere Ring mit wenigstens einem der beiden mittleren Adapteraufnahmen verbunden ist. Die beiden mittleren Adapteraufnahmen können gemeinsam über eine Muffe an dem wenigstens einen Mittelteil angeordnet sein. Es ist aber auch denkbar, dass jedes der beiden mittleren Adapteraufnahmen für sich über eine separate Muffe an dem wenigstens einen Mittelteil angeordnet ist.

Weiterhin sind die wenigstens zwei Adapteraufnahmen entlang der Längserstreckung der wenigstens einen längenveränderlichen Querverbindung verschiebbar. Hierdurch lassen sich der Abstand zwischen den wenigstens zwei Adapteraufnahmen verändern und so entsprechen der Breite des Einsatzes, welcher an den Adapteraufnahmen angeordnet werden soll, anpassen.

Es ist weiterhin denkbar, dass im Bereich der äußeren Enden der wenigstens einen längenveränderlichen Querverbindung Arretierungspunkte angeordnet sind, mithilfe derer die Adapteraufnahmen arretiert werden können. Die Arretierungspunkte können als Befestigungsnippel ausgebildet sein, die in entsprechende Aussparungen an den Adaptern eingreifen und einrasten können. Es können weiterhin mehrere Arretierungspunkte entlang der Längserstreckung der wenigstens einen längenveränderlichen Querverbindung vorgesehen sein, die jeweils einen Zwischenraum aufspannen, in welchem die Adapteraufnahmen hin- und herverschoben werden können.

Es ist außerdem weiterhin denkbar, dass die Adapteraufnahmen um die Längsachse der Querverbindung schwenkbar sind, sodass diese bei einer Nichtgebrauchsstellung nach unten, in Richtung der Räder des Kinder- oder Puppenwagens verschwenkbar und ggf. auch arretierbar sind, sodass diese beim Gebrauch des Kinder- oder Puppenwagens nicht stören.

In einer weiteren vorteilhaften Ausgestaltung des Kinder- oder Puppenwagens ist vorgesehen, dass die wenigstens zwei Adapteraufnahmen in wenigstens zwei Schwenkpositionen arretierbar ausgebildet sind.

Vorteilhaft lassen sich die wenigstens zwei Adapteraufnahmen so wenigstens in eine Gebrauchsposition oder in eine Nicht-Gebrauchsposition verbringen. In der Gebrauchsposition beträgt der Verschwenkungswinkel 0°. Das heißt, die Adapteraufnahmen erstrecken sich von der wenigstens einen längenveränderlichen Querverbindung senkrecht nach oben hin. In dieser Gebrauchsposition ist ein Einsatz für einen Kinder- oder Puppenwagen über entsprechende Adapter auf die Adapteraufnahmen aufsteckbar bzw. mit den Adapteraufnahmen verbindbar.

In der Nicht-Gebrauchsposition weisen die wenigstens zwei Adapteraufnahmen einen Verschwenkungswinkel gegenüber der senkrechten, nach oben hin ausgerichteten Gebrauchsposition von wenigstens 90° und maximal 180° auf. Sie sind gegenüber der Gebrauchsposition weggeklappt, sodass diese den Bereich oberhalb der wenigstens einen längenveränderlichen Querverbindung, an dem die wenigstens zwei verschwenkten Adapteraufnahmen angeordnet sind, freigeben.

Bei einer Ausführungsform mit vier Adapteraufnahmen, die entlang der Längserstreckung der wenigstens einen längenveränderlichen Querverbindung angeordnet sind, sind vorteilhaft die beiden mittleren Adapteraufnahmen verschwenkbar ausgebildet und in wenigstens zwei Schwenkpositionen arretierbar, und zwar wenigstens in die Gebrauchsposition und in die Nicht-Gebrauchsposition. In der Nicht-Gebrauchsposition geben die beiden mittleren Adapteraufnahmen den Bereich oberhalb der des wenigstens einen Mittelteils frei, sodass ein Einsatz an den beiden äußeren Adapteraufnahmen befestigt werden kann, sodass sich der Einsatz entlang der wenigstens einen längenveränderlichen Querverbindung erstreckt, ohne dass die beiden mittleren Adapteraufnahmen diese Anordnung blockieren.

Es ist vorteilhaft die wenigstens zwei Adapteraufnahmen durch form- und/oder reibschlüssige Arretierungen wenigstens in der Gebrauchsposition und in der Nicht-Gebrauchsposition jeweils arretierbar auszubilden. In der Ausgestaltung mit vier Adapteraufnahmen ist es vorteilhaft, wenn die beiden mitterlen Adapteraufnahmen jeweils in der Gebrauchsposition und in der Nicht-Gebrauchsposition arretierbar ausgebildet sind. So kann das Wagengestell des Kinder- oder Puppenwagens sowohl eine Ausbildung als Einzelwagen als auch eine Ausbildung als Zwillingswagen annehmen, indem sich die beiden mittleren Adapteraufnahmen entweder in der Nicht-Gebrauchsposition oder in der Gebrauchsposition befinden. In der Gebrauchsposition der beiden mittleren Adapteraufnahmen bildet der Kinder- oder Puppenwagen einen Zwillingswagen aus, bei dem sich zwei Einsätze nebeneinander anordnen lassen. In der Nicht-Gebrauchsposition bildet der Kinder- oder Puppenwagen einen Einzelwagen aus, bei dem sich nur ein Einsatz anordnen lässt. Als form- und/oder reibschlüssige Arretierungen können bspw. Feststellschrauben vorgesehen sein, die die verschwenkten Adapteraufnahmen gegenüber nicht verschwenkten Komponenten, wie der längenveränderlichen Querverbindung oder zumindest Teile hiervon, arretiert. Es können auch bspw. Rastnoppen vorgesehen sein, die in dazu korrespondierende Rastvertiefungen eingreifen, wobei die Rastnoppen an den schwenkbeweglichen Komponenten und die Rastvertiefungen an den nicht schwenkbeweglichen Komponenten angeordnet sind. Die genannte Anordnung ist jedoch nicht beschränkend zu verstehen, sodass auch sämtliche Anordnungen hierbei möglich sind, die für einen Fachmann zweckdienlich erscheinen.

In einer weiteren vorteilhaften Ausgestaltung des Kinder- oder Puppenwagens ist vorgesehen, dass die wenigstens zwei Adapteraufnahmen mit der wenigstens einen längenveränderlichen Querverbindung verschwenkbar ausgebildet sind.

Hierbei bilden die wenigstens zwei Adapteraufnahmen gemeinsam mit der wenigstens einen längenveränderlichen Querverbindung eine feste Verbindung aus. Beim Verschwenken der wenigstens zwei Adapteraufnahmen wird die wenigstens eine längenveränderliche Querverbindung um ihre eigene Achse rotiert. Die Achse verläuft hierbei entlang der Längserstreckung der wenigstens einen längenveränderlichen Querverbindung.

In der Ausgestaltung mit vier Adapteraufnahmen lassen sich vorteilhaft die beiden mittleren Adapteraufnahmen gemeinsam mit dem wenigstens einen Mittelteil, an welchem diese angeordnet sind, rotieren. Das wenigstens eine Mittelteil kann entweder gekoppelt mit den Außenteilen der wenigstens einen längenveränderlichen Querverbindung rotiert werden, sodass die gesamte wenigstens eine längenveränderliche Querverbindung beim Verschwenken der beiden mittleren Adapteraufnahmen rotiert wird. Es ist aber auch denkbar, dass das wenigstens eine Mittelteil entkoppelt von den Außenteilen rotierbar ist. Hierfür ist das wenigstens eine Mittelteil von den Außenteilen einerseits entlang der Längserstreckung der wenigstens einen längenveränderlichen Querverbindung verschieblich aufgenommen und andererseits von den Außenteilen entlang einer Rotationsachse drehbeweglich aufgenommen. Die Rotationsachse verläuft hierbei entlang der Längserstreckung der wenigstens einen längenveränderlichen Querverbindung. Sie erlaubt eine Rotation der längenveränderlichen Querverbindung um sich selbst.

In einer weiteren vorteilhaften Ausgestaltung des Kinder- oder Puppenwagens ist vorgesehen, dass die wenigstens zwei Adapteraufnahmen über wenigstens eine Schwenkführung an der wenigstens einen längenveränderlichen Querverbindung verschwenkbar ausgebildet sind.

Die wenigstens eine Schwenkführung ist vorteilhaft als eine Führungsnut ausgebildet, in die ein Führungsbolzen eingreift, der entlang der Führungsnut bewegbar ist bzw. von dieser geführt wird. Die Führungsnut ist vorteilhaft an wenigstens einem Außenteil der wenigstens einen längenveränderlichen Querverbindung angeordnet. Dabei erstreckt sich die Führungsnut sowohl entlang der Längserstreckung der wenigstens einen längenveränderlichen Querverbindung als auch um ihre Rotationsachse herum. Sie ist vorteilhaft als Spiralform oder als Z-Form mit stumpfen Winkeln entlang der Oberfläche des wenigstens einen Außenteils der wenigstens einen längenveränderlichen Querverbindung ausgebildet.

Der mit der Führungsnut korrespondierende Führungsbolzen ist vorteilhaft an dem wenigstens einen Mittelteil angeordnet, das von dem wenigstens einen Außenteil mit der Führungsnut aufgenommen ist. Der Führungsbolzen erstreckt sich von dem wenigstens einen Mittelteil radial nach außen, wobei dieser gleichzeitig in die Führungsnut eingreift. Eine Bewegung entlang der Längserstreckung der wenigstens einen längenveränderlichen Querverbindung lässt gleichzeitig den Führungsbolzen in der Führungsnut entlanggleiten, wobei durch die Form der Führungsnut eine Drehbewegung des wenigstens einen Mittelteils, an dem der Führungsbolzen angeordnet ist, bewirkt wird. Wird somit das wenigstens eine Mittelteil in das wenigstens eine Außenteil der wenigstens einen längenveränderlichen Querverbindung hineingeschoben bzw. herausgezogen, wird gleichzeitig das wenigstens eine Mittelteil gegenüber dem wenigstens einen Außenteil verdreht. Bei gleichzeitiger Anordnung wenigstens einer Adapteraufnahme an dem wenigstens einen Mittelteil wird durch eine Längenveränderung der wenigstens einen längenveränderlichen Querverbindung gleichzeitig eine Schwenkbewegung der wenigstens einen Adapteraufnahme an dem wenigstens einen Mittelteil bewirkt. Die Schwenkbewegung verschwenkt die wenigstens eine Adapteraufnahme vorteilhaft von einer Gebrauchsposition in eine Nicht-Gebrauchsposition oder umgekehrt.

Es ist ebenfalls denkbar, dass Führungsnut und Führungsbolzen genau umgekehrt zur vorangegangenen beschriebenen Ausführung angeordnet sind. So kann auch das wenigstens eine Mittelteil eine entsprechende Führungsnut aufweisen, in die ein Führungsbolzen eingreift, welcher sich von wenigstens einem Außenteil radial nach innen erstreckt. Die vollzogene Drehbewegung des wenigstens einen Mittelteils bzw. die Schwenkbewegung der daran angeordneten Adapteraufnahmen ist gleich zu der zuvor beschriebenen Bewegung. Bei einer längenverändernden Bewegung der längenveränderlichen Querverbindung wird gleichzeitig das wenigstens eine Mittelteil verdreht bzw. die daran angeordneten Adapteraufnahmen entsprechend verschwenkt.

In einer vorteilhaften Ausgestaltung mit vier Adapteraufnahmen werden durch die wenigstens eine Schwenkführung an der wenigstens einen längenveränderlichen Querverbindung die beiden mittleren Verbindungselemente beim Verkürzen in die Grundposition der wenigstens einen längenveränderlichen Querverbindung in eine Nicht-Gebrauchsposition verbracht, wobei diese aus der senkrechten Ausrichtung wenigstens um 90° und maximal um 180° verschwenkt werden. Entsprechend werden die beiden mittleren Adapteraufnahmen beim Verbreitern der wenigstens einen längenveränderlichen Querverbindung in die Spreizposition in eine Gebrauchsposition verbracht, in welcher sie senkrecht sich nach oben hin erstrecken, sodass ein Einsatz für einen Kinder- oder Puppenwagen zweckmäßig befestigt werden kann.

Vorteilhaft korrespondieren die beiden Schwenkpositionen der Adapteraufnahmen - Gebrauchsposition und Nicht-Gebrauchsposition - durch die wenigstens eine Schwenkführung mit der Grundposition und der Spreizposition der wenigstens einen längenveränderlichen Querverbindung. Die Schwenkbewegung der wenigstens zwei Adapteraufnahmen ist somit durch eine längenverändernde Bewegung der wenigstens einen längenveränderlichen Querverbindung bewirkbar.

In einer weiteren vorteilhaften Ausgestaltung des Kinder- oder Puppenwagens ist vorgesehen, dass die wenigstens zwei Verbindungselemente mit dem Scherenmechanismus gekoppelt ausgebildet sind, wobei eine Schwenkbewegung der wenigstens zwei Verbindungselemente durch den Scherenmechanismus bewirkbar ist.

Hierfür sind die wenigstens zwei Adapteraufnahmen zusätzlich zur Anlenkung an die wenigstens eine längenveränderliche Querverbindung mit dem Scherenmechanismus wirkverbunden. Eine solche Verbindung kann bspw. ein Stab oder ein Zugseil sein, wobei ein Ende mit dem Scherenmechanismus und das andere Ende mit einer der wenigstens zwei Adapteraufnahmen verbunden ist. Es ist ebenfalls auch denkbar, dass jede Adapteraufnahme separat mit dem Scherenmechanismus verbunden ist. Bei der Ausgestaltung der Verbindung als Stab ist dieser vorteilhaft biegbar bzw. flexibel ausgebildet. Beim Öffnen des Scherenmechanismus wird über die Verbindung eine Kraft auf wenigstens eine der Adapteraufnahmen bewirkt, aufgrund der eine Schwenkbewegung der wenigstens zwei Adapteraufnahmen in die Gebrauchsposition bewirkt wird. Entsprechend umgekehrt wird beim Schließen des Scherenmechanismus über die Verbindung eine Kraft auf wenigstens eine der Adapteraufnahmen bewirkt, aufgrund der eine Schwenkbewegung in die Nicht-Gebrauchsposition bewirkt wird.

Vorteilhaft korrespondieren die beiden Schwenkpositionen der Adapteraufnahmen - Gebrauchsposition und Nicht-Gebrauchsposition - durch den Scherenmechanismus mit der Grundposition und der Spreizposition der wenigstens einen längenveränderlichen Querverbindung. Die Schwenkbewegung der wenigstens zwei Adapteraufnahmen ist somit auch gleichzeitig durch eine längenverändernde Bewegung der wenigstens einen längenveränderlichen Querverbindung über den Scherenmechanismus bewirkbar.

In einer weiteren vorteilhaften Ausgestaltung mit vier Adapteraufnahmen sind vorteilhaft die beiden äußeren Verbindungselemente von der längenveränderlichen Querverbindung entkoppelt ausgeführt. So kann sich die gesamte längenveränderliche Querverbindung um die eigene Längsachse drehen, ohne dass gleichzeitig die beiden äußeren Adapteraufnahmen mitverschwenkt werden. Es werden hierbei lediglich die beiden mittleren Adapteraufnahmen entsprechend der Rotationsbewegung der längenveränderlichen Querverbindung verschwenkt. Die beiden äußeren Verbindungselemente behalten ihre ursprüngliche Ausrichtung, vorteilhaft senkrecht nach oben hin ausgerichtet.

In einer weiteren, vorteilhaften Ausgestaltung sind die beiden äußeren Adapteraufnahmen um die Achse der Längserstreckung der Außenteile schwenkbar. So ist bspw. denkbar, dass die beiden äußeren Adapteraufnahmen ebenfalls wie die beiden mittleren Adapteraufnahmen um 90° bis maximal 180° verschwenkt werden können. Dies ist besonders vorteilhaft, wenn das Wagengestell des Kinder- oder Puppenwagens platzsparend zusammengeklappt wird. So können auch sämtliche Adapteraufnahmen mit einklappt bzw. eingeschwenkt werden.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Ansicht des Kinder- oder Puppenwagens als Einzelwagen
- Fig. 2: eine perspektivische Ansicht des Kinder- oder Puppenwagens als Zwillingswagen
- Fig. 3: eine Frontalansicht des Kinder- oder Puppenwagens als Einzelwagen
- Fig. 4: eine Frontalansicht des Kinder- oder Puppenwagens als Einzelwagen mit einem Einsatz
- Fig. 5: eine perspektivische Ansicht des Kinder- oder Puppenwagens als Zwillingswagen mit zwei nebeneinander angeordneten Einsätzen jeweils in der Liegeposition
- Fig. 6: eine perspektivische Ansicht des Kinder- oder Puppenwagens als Zwillingswagen mit zwei nebeneinander angeordneten Einsätzen in der Sitz- und in der Liegeposition
- Fig. 7: eine perspektivische Ansicht des Kinder- oder Puppenwagens als Einzelwagen mit einem Einsatz in der Liegeposition
- Fig. 8: eine perspektivische Ansicht der längenveränderlichen Querverbindung in einer Spreizposition
- Fig. 9: eine perspektivische Ansicht der längenveränderlichen Querverbindung in einer Grundposition

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

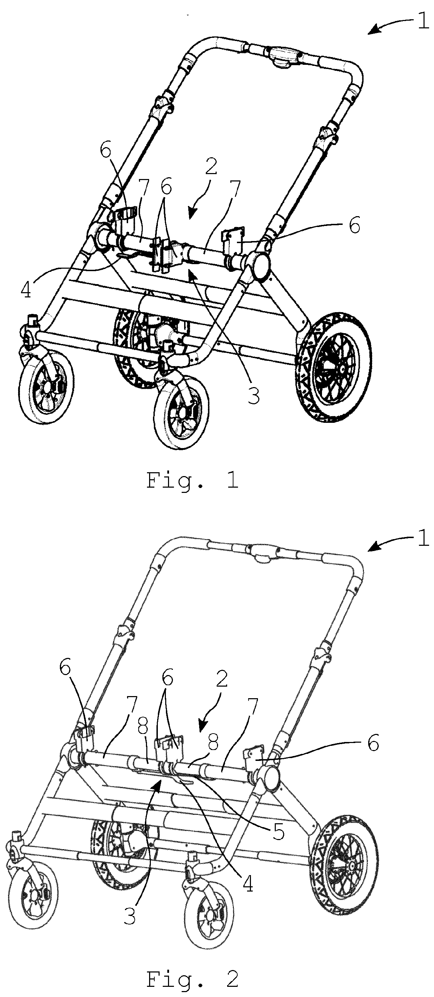

Fig. 1 zeigt eine perspektivische Ansicht des Kinder- oder Puppenwagens als Einzelwagen. Das Wagengestell 1 weist von beiden Seiten aus gesehen eine λ-Form auf, wobei die beiden Seiten mit waagerechten Querverstrebungen verbunden sind. Die Querverstrebungen sind hierbei jeweils in ihrer Länge veränderlich ausgebildet und an den äußeren Enden der λ-Form, d.h. oben und unten, sowie jeweils mittig im unteren Bereich angeordnet. An den unteren Enden der λ-Form ist jeweils ein Rad angeordnet, sodass das Wagengestell 1 insgesamt vier Räder aufweist. Die oberste längenveränderliche Querverstrebung des Wagengestells 1 bildet gleichzeitig einen Griff zum Schieben des Wagengestells 1 des Kinder- oder Puppenwagens aus.

Die Kreuzungspunkte der unteren Schenkel der λ-Form sind über eine längenveränderliche Querverbindung 2 miteinander verbunden. Sie ist der erfindungswesentliche Bestandteil des Wagengestells 1.

Die längenveränderliche Querverbindung 2 ist, wie die längenveränderlichen Querverstrebungen auch, teleskopartig ausgebildet, wobei wenigstens zwei Außenteile 7 zwischen ihrer Mitte wenigstens ein Mittelteil 8, was hier nicht gezeigt ist, da es von den beiden Außenteilen 7 vollständig aufgenommen ist, aufnehmen. Ebenfalls nicht gezeigt sind Federelemente in den Außenteilen 7, die jeweils von beiden Seiten mit gleicher Kraft auf die Mittelteile 8 wirken, sodass diese stets mittig zwischen den Außenteilen 7 positioniert sind, wenn diese zusammen- oder auseinandergeschoben werden. Die Außenteile 7 sind in der gezeigten Ausführungsform als Rohre ausgebildet.

Die längenveränderliche Querverbindung 2 weist weiterhin an ihren äußeren Enden der Längserstreckung jeweils eine Adapteraufnahme 6 auf, die beide senkrecht nach oben hin abstehen. Mittig sind zwei weitere Adapteraufnahmen 6 angeordnet, die gegenüber den Adapteraufnahmen 6 an den äußeren Enden der Längserstreckung der längenveränderlichen Querverbindung 2 um 90° verschwenkt sind. Sie geben damit den Bereich oberhalb der längenveränderlichen Querverstrebung 2 an dieser Stelle frei. Die Adapteraufnahmen 6 sind dazu geeignet, einen oder mehrere Einsätze 10 für einen Kinder- oder Puppenwagen - hier nicht dargestellt - aufzunehmen und zu arretieren.

Unterhalb der längenveränderlichen Querverbindung 2 ist ein Scherenmechanismus 3 angeordnet, mithilfe dessen eine Längenveränderung der längenveränderlichen Querverbindung 2 bewirkt werden kann. Der Scherenmechanismus 3 weist hierbei wenigstens einen ersten Hebel 4 und einen zweiten Hebel 5 auf, wobei der zweite Hebel 5 in der gezeigten Darstellung durch die längenveränderliche Querverbindung 2 verdeckt ist. Durch Umlegen des ersten Hebels 4 kann mithilfe des Scherenmechanismus 3 die längenveränderliche Querverbindung 2 auseinandergeschoben oder zusammengeschoben werden. Hierbei ist der erste Hebel 4 mit einem Ende an einem Außenteil 7 angelenkt. Der zweite Hebel 5 ist entsprechend am anderen Außenteil 7 mit einem Ende angelenkt. Gleichzeitig ist der zweite Hebel 5 mit dem anderen, gegenüberliegenden Ende am ersten Hebel 4 angelenkt, sodass beim ersten Hebel 4 ein Ende frei bleibt. An diesem freien Ende kann der erste Hebel 4 von einem Benutzer gegriffen und bewegt bzw. umgelegt werden. Wird der erste Hebel 4 bewegt, so öffnet oder schließt sich entsprechend der Scherenmechanismus 3, wobei die an die Außenteile 7 angelenkten Enden des ersten Hebels 4 und des zweiten Hebels 5 aufeinander zu- oder voneinander wegbewegt werden, was wiederum eine Längenveränderung der längenveränderlichen Querverbindung 2 bewirkt. Mit Umlegen des ersten Hebels 4 um 180° wird die längenveränderliche Querverbindung 2 und damit das gesamte Wagengestell 1 von einer Grundposition in eine Spreizposition oder umgekehrt verbracht. Sie bilden gleichzeitig die minimale bzw. die maximale Breite des Wagengestells 1 aus. In diesen Positionen weist der erste Hebel 4 jeweils eine Ausrichtung parallel zur Längserstreckung der längenveränderlichen Querverbindung 2 auf.

In der Grundposition ist das Wagengestell 1 und damit der Kinder- oder Puppenwagen als Einzelwagen ausgebildet. In der Spreizposition ist das Wagengestell 1 und damit der Kinder- oder Puppenwagen entsprechend als Zwillingswagen ausgebildet.

Eine solche Ausbildung als Zwillingswagen ist in Fig. 2 gezeigt, die eine perspektivische Ansicht des Kinder- oder Puppenwagens mit der längenveränderlichen Querverbindung 2 in der Spreizposition zeigt. Das gezeigte Wagengestell 1 entspricht hierbei im Wesentlichen dem Wagengestell 1 aus Fig. 1.

Im Unterschied zur Fig. 1 ist der erste Hebel 4 um 180° umgelegt, wodurch der Scherenmechanismus 3 geöffnet ist. Die an den Außenteilen 7 angelenkten Enden des ersten Hebels 4 und des zweiten Hebels 5 sind diametral zueinander ausgerichtet, was wiederum eine Längenveränderung der längenveränderlichen Querverbindung 2 bewirkt. Das Wagengestell 1 hat hierdurch seine maximale Breite und befindet sich in der Spreizposition.

Die längenveränderliche Querverbindung 2 ist in der Spreizposition auseinandergeschoben, sodass das Mittelteil 8 zwischen den Außenteilen 7 teleskopartig hervortritt. Die beiden mittleren Adapteraufnahmen 6 sind derart verschwenkt, dass sie wie die beiden äußeren Adapteraufnahmen 6 senkrecht nach oben stehen. Durch die in den beiden Außenteilen 7 aufgenommenen Federelemente und damit bewirkte symmetrische Kraftbeaufschlagung auf beide Seiten des Mittelteils 8 ist dieses stets mittig zwischen den Außenteilen 7 angeordnet. Gleiches gilt ebenfalls für die längenveränderlichen Querverstrebungen am Wagengestell 1, die ebenfalls in der Spreizposition auseinandergeschoben sind.

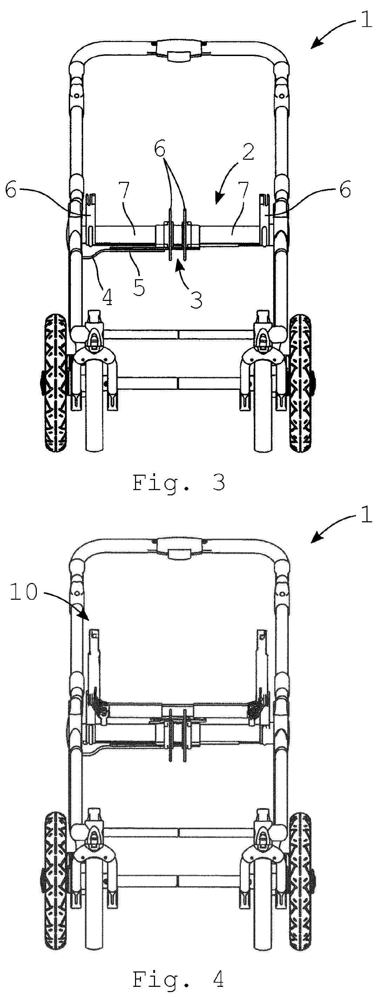

In Fig. 3 ist eine Frontalansicht des Kinder- oder Puppenwagens als Einzelwagen gezeigt. Die Ansicht ist eine Frontalansicht des Kinder- oder Puppenwagens bzw. des Wagengestells 1 aus Fig. 1, wobei hier im Unterschied zur Fig. 1 die zwei längenveränderliche Querverstrebung, die mittig im unteren Bereich des Wagengestells 1 angeordnet sind, weggelassen sind. In dieser Ansicht ist der Scherenmechanismus 3 mit erstem Hebel 4 und zweitem Hebel 5 zu sehen. Der erste Hebel 4 zeigt mit seinem freien Ende von den beiden mittleren Adapteraufnahmen 6 weg nach außen. Erster Hebel 4 und zweiter Hebel 5 zeigen in die gleiche Richtung und sind parallel zur Längserstreckung der längenveränderlichen Querverbindung 2 bzw. zu deren Außenteilen 7 angeordnet. Die längenveränderliche Querverbindung 2 ist zusammengeschoben. Das Wagengestellt 1 weist seine geringste Breite auf und befindet sich in der Grundposition.

Fig. 4 zeigt eine Frontalansicht des Kinder- oder Puppenwagens als Einzelwagen mit einem Einsatz 10. Diese Ansicht entspricht der gleichen Ansicht wie in Fig. 3 mit dem Unterschied, dass von den beiden Adapteraufnahmen 6 an den äußeren Enden der Längserstreckung der längenveränderlichen Querverbindung 2 ein Einsatz 10 für einen Kinder- oder Puppenwagen aufgenommen ist. Gezeigt sind hierbei lediglich Teile des Einsatzes 10, und zwar mit den Adapteraufnahmen 6 in Verbindung stehende Adapter, welche wiederum über eine Querverbindung miteinander verbunden sind. Adapter und Querverbindung des Einsatzes 10 bilden im Profil eine U-Form aus. Der Einsatz 10 ist hierbei von oben auf die Adapteraufnahmen 6 aufgesetzt und mit ihnen in Verbindung gebracht.

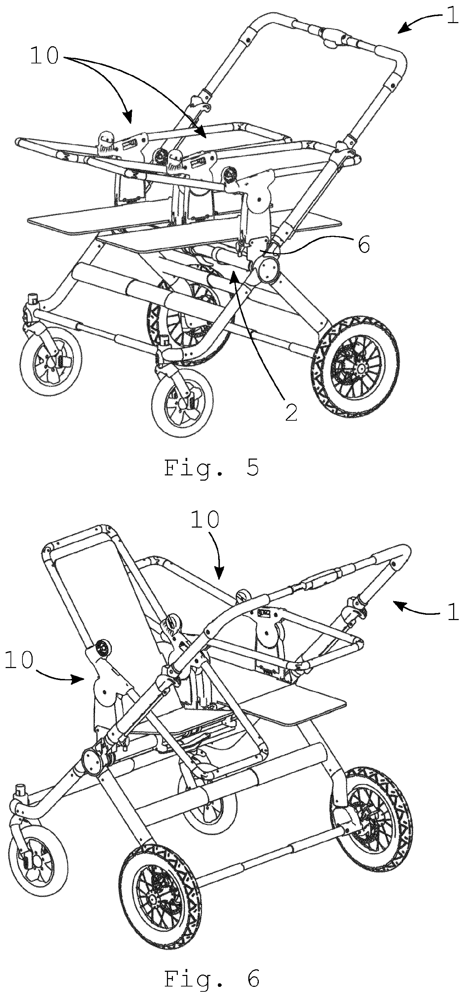

In Fig. 5 ist eine perspektivische Ansicht des Kinder- oder Puppenwagens als Zwillingswagen mit zwei nebeneinander angeordneten Einsätzen 10 zu sehen, die sich jeweils in der Liegeposition befinden. Der besseren Sichtbarkeit halber sind die Einsätze 10 ohne einen Stoffbezug dargestellt. Die Einsätze 10 weisen jeweils einen obenliegenden, rechteckigen Rahmen auf, der in der Mitte schwenkbar an zwei sich gegenüberstehenden, senkrechten Adaptern befestigt ist. Im unteren Bereich der Einsätze 10 ist jeweils ein Boden mit jeweils einer Faltachse angeordnet. Der Boden wird von einem Stoffbezug, welcher am Rahmen befestigt ist und hier nicht dargestellt ist, gehalten.

Die Einsätze 10 sind mit ihren Adaptern auf die Adapteraufnahmen 6 aufgesetzt, sodass die Einsätze 10 in Höhe der längenveränderlichen Querverbindung 2 nebeneinander angeordnet sind. Hierfür stehen zwangsläufig alle Adapteraufnahmen 6 senkrecht nach oben. Gleichzeitig ist die längenveränderliche Querverbindung auseinandergeschoben, sodass das Wagengestell 1 sich in der Spreizposition befindet. Hierdurch weist das Wagengestell 1 ausreichend Platz in der Breite auf, um zwei Einsätze 10, wie dargestellt, nebeneinander anordnen zu können.

Fig. 6 zeigt eine perspektivische Ansicht des Kinder- oder Puppenwagens als Zwillingswagen mit zwei nebeneinander angeordneten Einsätzen 10 in der Sitz- und in der Liegeposition. Im Wesentlichen zeigt es das Wagengestell 1 mit darin angeordneten Einsätzen 10 aus einer perspektivischen Ansicht, wobei die oberste Querverstrebung des Wagengestells 1 in Richtung des Betrachters zeigt. Der vom Betrachter aus gesehen linke Einsatz 10 weist einen geneigten Rahmen auf und befindet sich in einer Sitzposition. Der andere Einsatz 10 befindet sich wie bereits in Fig. 5 gezeigt in einer Liegeposition.

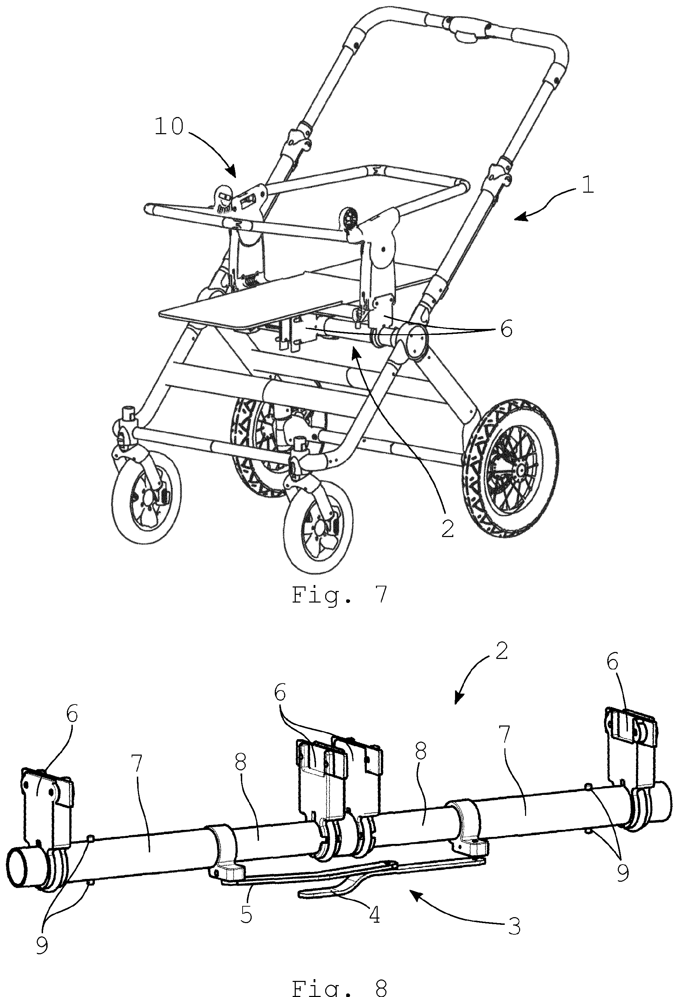

In Fig. 7 ist eine perspektivische Ansicht des Kinder- oder Puppenwagens als Einzelwagen mit einem Einsatz 10 in der Liegeposition dargestellt. Diese Ansicht entspricht im Wesentlichen der Ansicht aus Fig. 5, wobei das Wagengestell 1 sich in der Grundposition befindet, in welcher die längenveränderliche Querverbindung 2 zusammengeschoben ist. Die beiden mittleren Adapteraufnahmen 6 sind gegenüber den beiden äußeren Adapteraufnahmen 6 um 90° verschwenkt, sodass sie waagerecht ausgerichtet sind und Platz für den darüber angeordneten Einsatz 10 schaffen. Sie befinden sich in einer Nicht-Gebrauchsposition. Der Einsatz 10 ist mittig auf der längenveränderlichen Querverbindung 2 über die beiden äußeren Adapteraufnahmen 6 angeordnet. Sie sind leicht zur Mitte der längenveränderlichen Querverbindung 2 hinverschoben. Im Gegensatz zur Konfiguration des Wagengestells 1 in der Spreizposition sind die beiden äußeren Adapteraufnahmen 6 jeweils nicht direkt an den äußersten Enden der Längserstreckung der längenveränderlichen Querverbindung 2 angeordnet, sondern leicht nach innen in Richtung Mitte verschoben. Dies stellt eine mögliche Ausführungsform des Kinder- oder Puppenwagens bzw. des dazugehörigen Wagengestells 1 mit längenveränderlicher Querverbindung 2 dar.

In der Fig. 8 ist eine perspektivische Ansicht der längenveränderlichen Querverbindung 2 in der Spreizposition gezeigt, in welcher die längenveränderliche Querverbindung 2 ihre größte Längserstreckung aufweist. Die längenveränderliche Querverbindung 2 weist hierbei zwei Außenteile 7 und ein Mittelteil 8 auf, wobei das Mittelteil 8 teleskopartig an seinen beiden gegenüberliegenden Enden von jeweils einem Außenteil 7 aufgenommen ist. Die Außenteile 7 sowie das Mittelteil 8 sind zylinderförmig ausgebildet, wobei wenigstens die Außenteile 7 als Rohre ausgebildet sind. Innerhalb der Außenteile 7 sind vorteilhaft Federelemente vorgesehen, die symmetrisch von beiden Seiten auf das Mittelteil 8 drücken, sodass dieses stets mittig zwischen den beiden Außenteilen 7 angeordnet ist. Die Außenteile 7 können so aufeinander zu- und voneinander wegbewegt werden, wobei das Mittelteil 8 immer mittig angeordnet ist.

Die gezeigte längenveränderliche Querverbindung 2 ist vorteilhaft für ein Wagengestell 1 eines Kinder- oder Puppenwagens vorgesehen, dass dadurch in seiner Breite variierbar ausgebildet ist. In der Grundposition der längenveränderlichen Querverbindung 1 weist das Wagengestell 1 des Kinder- oder Puppenwagens seine geringste Breite auf. In der hier gezeigten Spreizposition weist das Wagengestell 1 des Kinder- oder Puppenwagens seine größte Breite auf.

An den beiden Außenteilen 7 ist jeweils eine Adapteraufnahme 6 angeordnet. Sie sind im Bereich der äußeren Enden der längenveränderlichen Querverbindung 2 bzw. der Außenteile 7 angeordnet. Gleichzeitig erstrecken sich diese Adapteraufnahmen 6 vom jeweiligen Außenteil 7 aus senkrecht nach oben, sodass von oben ein Einsatz 10 für einen Kinder- oder Puppenwagen aufgesetzt und befestigt werden kann.

Vom Betrachter aus gesehen ist unterhalb der längenveränderlichen Querverbindung 2 ein Scherenmechanismus 3 angeordnet, welcher einen ersten Hebel 4 und einen zweiten Hebel 5 aufweist, wobei der zweite Hebel 5 mit einem Ende am ersten Hebel 4 angelenkt ist. Das gegenüberliegende Ende ist vom Betrachter aus gesehen am linken Außenteil 7 angelenkt. Der erste Hebel 4 wiederum ist dem gegenüberliegend mit einem äußeren Ende an dem vom Betrachter aus gesehen rechten Außenteil 7 angelenkt. Das freie Ende des ersten Hebels 4 ist im Wesentlichen parallel zum zweiten Hebel 5 ausgerichtet bzw. als eine gedachte Verlängerung des zweiten Hebels 5 ausgebildet und zeigt in Richtung des Anlenkungspunkts zwischen zweitem Hebel 5 und Außenteil 7. Die Anlenkungspunkte des Scherenmechanismus 3 liegen auf einer gedachten Gerade parallel zur Längserstreckung der gezeigten längenveränderlichen Querverbindung 2. Der Scherenmechanismus 3 ist in der gezeigten Ausführung geöffnet, womit sich die längenveränderliche Querverbindung 2 in der Spreizposition befindet. Das Wagengestelle 1 des Kinder- oder Puppenwagens, welches die wenigstens eine längenveränderliche Querverbindung 2 aufweist, weist in dieser Konfiguration seine maximale Breite auf und ist vorteilhaft als Zwillingswagen ausgebildet, welcher zwei Einsätze 10 aufnehmen kann. Hierzu sind die beiden mittleren Adapteraufnahmen 6 parallel zu den beiden äußeren Adapteraufnahmen 6 senkrecht nach oben hin ausgerichtet. Das Mittelteil 8 ist teleskopartig aus den Außenteilen 7 herausgeschoben und mittig zwischen den Außenteilen 7 angeordnet. In dieser Spreizposition ist es möglich, zwei Einsätze 10 über die Adapteraufnahmen 6 nebeneinander anzuordnen.

Erster Hebel 4 und zweiter Hebel 5 sind in der gezeigten Ausführung vorteilhaft als Flacheisen ausgeführt. Es können aber auch statt Flacheisen runde Stangen oder Rohre vorgesehen sein. Dies ist nicht einschränkend zu verstehen. Es sind alle weiteren Ausführungsformen für die Hebel 4, 5 möglich, die ein Fachmann aus seinem Fachwissen heraus als zweckdienlich erachten würde.

Weiterhin weisen die beiden Außenteile 7 jeweils zwei Mal zwei sich diametral gegenüberliegende Arretierungspunkte 9 in Form von zylindrischen Erhebungen auf. An diese Arretierungspunkte 9 können die Adapteraufnahmen 6 über entsprechende zylindrische Aussparungen befestigt werden. Die Arretierungspunkte sind jeweils im Bereich des äußeren Endes der jeweiligen Außenteile 7 angeordnet und weisen einen Abstand zueinander auf. Der Abstand von zwei Arretierungspunkten 9 an einem Außenteil 7 spannt einen Zwischenraum auf, in dem eine Adapteraufnahme 6 aufgenommen ist. Sie kann zwischen den beiden Arretierungspunkten 9 hin- und herverschoben werden und entweder an dem einen Arretierungspunkt, welcher zum äußeren Ende des Außenteils 7 hin angeordnet ist, oder entsprechend entgegengesetzt am anderen Arretierungspunkt 9 in Richtung Mitte der längenveränderlichen Querverbindung 2 angeordnet sein, je nach Anzahl und/oder Breite des an den Adapteraufnahmen 6 anzuordnenden Einsatzes 10.

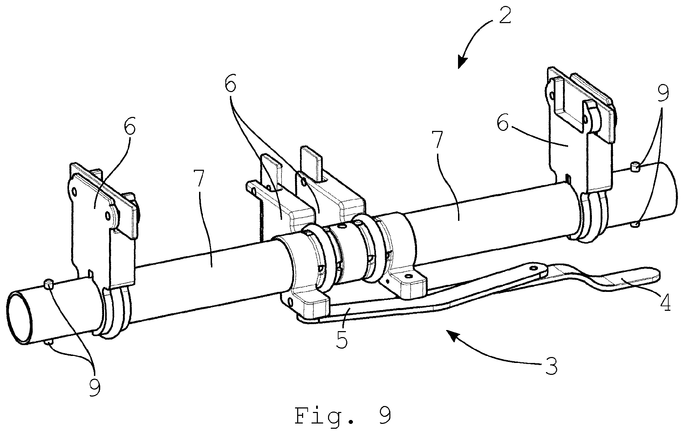

In der Konfiguration des Wagengestells 1 als Zwillingswagen mit maximaler Längserstreckung der längenveränderlichen Querverbindung 2 sind die äußeren Adapteraufnahmen 6 vorteilhaft an den zu den äußeren Enden der Außenteile 7 hin angeordneten Arretierungspunkte 7 befestigt. In der entgegengesetzten Konfiguration des Wagengestells 1 als Einzelwagen mit minimaler Längserstreckung der längenveränderlichen Querverbindung 2 sind die äußeren Adapteraufnahmen 6 vorteilhaft an den in Richtung Mitte angeordneten Arretierungspunkten 9 befestigt, so wie nachfolgend in der Fig. 9 gezeigt.

In der Fig. 9 ist eine perspektivische Ansicht der längenveränderlichen Querverbindung 2 in der Grundposition gezeigt, die gegenüber der Spreizposition eine verringerte Breite bzw. Längserstreckung aufweist. Diese Ansicht zeigt die längenveränderliche Querverbindung 2, wie sie bereits in Fig. 8 offenbart ist, jedoch in einer Position mit geringerer Breite als die Spreizposition. Hierbei ist der erste Hebel 4 um 180° gegenüber der Position in Fig. 8 umgelegt - vom Betrachter aus gesehen nach rechts zeigend, wodurch die beiden Enden des ersten Hebels 4 und des zweiten Hebels 5, die jeweils an den Außenteilen 7 der längenveränderlichen Querverbindung 2 angeordnet sind, aufeinander zubewegt sind, wodurch wiederum die beiden Außenteile 7 zusammengeschoben sind. Hierdurch weist die längenveränderlichen Querverbindung 2 eine verringerte Längserstreckung auf.

Weiterhin sind die beiden mittleren Adapteraufnahmen 6 um 90° in die Waagerechte verschwenkt und geben so den Bereich oberhalb der längenveränderlichen Querverbindung 2 frei, sodass an dieser Stelle ein Einsatz 10 aufgenommen werden kann, welcher über die beiden äußeren Adapteraufnahmen 6 an den Außenteilen 7 aufgenommen ist. Der Einsatz 10 ist hier nicht gezeigt.

Des Weiteren sind die beiden äußeren Adapteraufnahmen 6 an den Arretierungspunkten 9, die weiter innen in Richtung der Mitte der längenveränderlichen Querverbindung 2 angeordnet sind, arretiert. Es sind hierdurch die äußersten Arretierungspunkte 9 an den äußeren Enden der Längserstreckung der längenveränderlichen Querverbindung 2 zu sehen.

### Bezugszeichenliste

- 1: Wagengestell
- 2: längenveränderliche Querverbindung
- 3: Scherenmechanismus
- 4: erster Hebel
- 5: zweiter Hebel
- 6: Adapteraufnahme
- 7: Außenteil
- 8: Mittelteil
- 9: Arretierpunkt
- 10: Einsatz

## Patentansprüche

1. Kinder- oder Puppenwagen aufweisend ein Wagengestell (1) bestehend aus mehreren Längs- und Querholmen und wenigstens einer längenveränderlichen Querverbindung (2), mittels welcher die Breite des Wagengestells (1) variierbar ist, **wobei** die wenigstens eine längenveränderliche Querverbindung (2) wenigstens zwei Adapteraufnahmen (6) zum lösbaren Befestigen eines Einsatzes (10) aufweist, wobei die wenigstens eine längenveränderliche Querverbindung (2) wenigstens einen Mechanismus zur Längenveränderung der längenveränderlichen Querverbindung (2) aufweist, **dadurch gekennzeichnet, dass** die wenigstens eine längenveränderliche Querverbindung (2) teleskopartig bestehend aus wenigstens zwei Außenteilen (7) und wenigstens einem Mittelteil (8) ausgebildet ist, wobei zwischen den wenigstens zwei Außenteilen (7) das wenigstens eine Mittelteil (8) zumindest teilweise aufgenommen ist, wobei an den beiden äußeren Enden des wenigstens einen Mittelteils (8) jeweils ein Federelement angeordnet ist, welches gleichzeitig von den wenigstens zwei Außenteilen (7) aufgenommen ist, die wenigstens zwei Federelemente auf beiden Seiten des einen Mittelteils (8) bewirken eine symmetrische, beidseitige Kraftbeaufschlagung auf das wenigstens eine Mittelteil (8) sodass das wenigstens eine Mittelteil (8) vor, während und nach dem Zusammen- oder Auseinanderschieben der teleskopartig ausgebildeten längenveränderlichen Querverbindung (2) stets mittig zwischen den wenigstens zwei Außenteilen (8) angeordnet ist.

2. Kinder- oder Puppenwagen nach Patentanspruch 1, **dadurch gekennzeichnet, dass** der wenigstens eine Mechanismus an der wenigstens einen längenveränderlichen Querverbindung (2) ein Scherenmechanismus (3) ist.

3. Kinder- oder Puppenwagen nach Patentanspruch 1, **dadurch gekennzeichnet, dass** die wenigstens zwei Adapteraufnahmen (6) an dem wenigstens einem Mittelteil (8) und/oder jeweils an wenigstens einem Außenteil (7) angeordnet sind.

4. Kinder- oder Puppenwagen nach Patentanspruch 1, **dadurch gekennzeichnet, dass** die wenigstens eine längenveränderliche Querverbindung (2) in wenigstens zwei Positionen arretierbar ausgebildet ist, wobei die erste Position eine Grundposition und die zweite Position eine gegenüber der Grundposition verbreiterte Spreizposition ist.

5. Kinder- oder Puppenwagen nach Patentanspruch 1, **dadurch gekennzeichnet, dass** die wenigstens zwei Adapteraufnahmen (6) um die Längsachse der wenigstens einen längenveränderbaren Querverbindung (2) herum schwenkbar und/oder entlang der Längsachse der wenigstens einen längenveränderbaren Querverbindung (2) verschiebbar ausgebildet sind.

6. Kinder- oder Puppenwagen nach Patentanspruch 5, **dadurch gekennzeichnet, dass** die wenigstens zwei Adapteraufnahmen (6) in wenigstens zwei Schwenkpositionen arretierbar ausgebildet sind.

7. Kinder- oder Puppenwagen nach Patentanspruch 5, **dadurch gekennzeichnet, dass** die wenigstens zwei Adapteraufnahmen (6) mit der wenigstens einen längenveränderlichen Querverbindung (2) verschwenkbar ausgebildet sind.

8. Kinder- oder Puppenwagen nach Patentanspruch 3 und 5
**dadurch gekennzeichnet, dass** die wenigstens zwei Adapteraufnahmen (6) über wenigstens eine Schwenkführung an der wenigstens einen längenveränderlichen Querverbindung (2) verschwenkbar ausgebildet sind.

9. Kinder- oder Puppenwagen nach Patentanspruch 2 und 5,
**dadurch gekennzeichnet, dass** die wenigstens zwei Adapteraufnahmen (6) mit dem Scherenmechanismus (3) gekoppelt ausgebildet sind, wobei eine Schwenkbewegung der wenigstens zwei Adapteraufnahmen (6) durch den Scherenmechanismus (3) bewirkbar ist.

## Claims

1. Baby or doll carriage comprising a carriage frame (1) consisting of several longitudinal bars and crossbars and at least one cross-connector (2) which is variable in length by means of which the width of the carriage frame (1) can be varied, wherein the at least one length-adjustable cross-connector (2) has at least two adapter receptacles (6) for the detachable attachment of an insert (10), wherein the at least one length-adjustable cross-connector (2) has at least one mechanism for adjusting the length of the length-adjustable cross-connector (2), **characterized in that** the at least one length-adjustable cross-connector (2) is designed in a telescopic manner, consisting of at least two outer parts (7) and at least one middle part (8), wherein the at least one middle part (8) is at least partially mounted between the at least two outer parts (7), wherein a spring element is arranged at the two outer ends of the at least one middle part (8), which is simultaneously mounted by the at least two outer parts (7), the at least two spring elements on both sides of the one middle part (8) cause a symmetrical, bilateral force applied to the at least one middle part (8) so that the at least one middle part (8) is always positioned centrally between the at least two outer parts (7) before, during, and after the telescopically designed, length-adjustable cross-connector (2) is pushed together or pulled apart.

2. Baby or doll carriage according to patent claim 1,
**characterized in that** the at least one mechanism at the at least one length-adjustable cross-connector (2) is a scissor mechanism (3).

3. Baby or doll carriage according to patent claim 1,
**characterized in that** the at least two adapter receptacles (6) are arranged on the at least one middle part (8) and/or each on at least one outer part (7).

4. Baby or doll carriage according to patent claim 1,
**characterized in that** the at least one cross-connector (2) is designed to be lockable in at least two positions, wherein the first position being a basic position, and the second position being a spread position which is wider than the basic position.

5. Baby or doll carriage according to patent claim 1,
**characterized in that** the at least two adapter receptacles (6) are designed to be pivotable around the longitudinal axis of the at least one length-adjustable cross-connector (2) and/or displaceable along the longitudinal axis of the at least one length-adjustable cross-connector (2).

6. Baby or doll carriage according to patent claim 5,
**characterized in that** the at least two adapter receptacles (6) are designed to be lockable in at least two pivot positions.

7. Baby or doll carriage according to patent claim 5,
**characterized in that** the at least two adapter receptacles (6) are designed to be pivotable with the at least one length-adjustable cross-connector (2).

8. Baby or doll carriage according to patent claim 3 and 5,
**characterized in that** the at least two adapter receptacles (6) are designed to be pivotable via at least one pivot guide on the at least one length-adjustable cross-connector (2).

9. Baby or doll carriage according to patent claim 2 and 5,
**characterized in that** the at least two adapter receptacles (6) are designed to be coupled to the scissor mechanism (3), wherein a pivoting motion of the at least two adapter receptacles (6) can be effected by the scissor mechanism (3).

## Revendications

1. Voiture d'enfant ou de poupée, comprenant un châssis (1) composé de plusieurs longerons et traverses et d'au moins une liaison transversale (2) réglable en longueur, au moyen de laquelle la largeur du châssis (1) est apte à être modifiée, ladite au moins une liaison transversale (2) réglable en longueur comprenant au moins deux logements d'adaptateur (6) pour la fixation amovible d'un insert (10), ladite au moins une liaison transversale (2) réglable en longueur comprenant au moins un mécanisme pour modifier la longueur de la liaison transversale (2) réglable en longueur, **caractérisée en ce que** ladite au moins une liaison transversale (2) réglable en longueur est de type télescopique, consistant en au moins deux parties extérieures (7) et au moins une partie centrale (8), ladite au moins une partie centrale (8) étant logée au moins partiellement entre lesdites au moins deux parties extérieures (7), un élément élastique étant agencé à chacune des deux extrémités extérieures de ladite au moins une partie centrale (8), lequel élément élastique étant reçu simultanément par lesdites au moins deux parties extérieures (7), lesdits au moins deux éléments élastiques sur les deux côtés de ladite une partie centrale (8) exerçant une force symétrique de part et d'autre de ladite au moins une partie centrale (8) de telle sorte que ladite au moins une partie centrale (8) est toujours disposée au centre entre lesdites au moins deux parties extérieures (8), avant, pendant et après le rapprochement ou l'écartement de la liaison transversale (2) télescopique réglable en longueur.

2. Voiture d'enfant ou de poupée selon la revendication 1, **caractérisée en ce que** ledit au moins un mécanisme sur ladite au moins une liaison transversale (2) réglable en longueur est un mécanisme à ciseaux (3).

3. Voiture d'enfant ou de poupée selon la revendication 1, **caractérisée en ce que** lesdits au moins deux logements d'adaptateur (6) sont aménagés sur ladite au moins une partie centrale (8) et/ou respectivement sur au moins une partie extérieure (7).

4. Voiture d'enfant ou de poupée selon la revendication 1, **caractérisée en ce que** ladite au moins une liaison transversale (2) réglable en longueur est conçue de manière à pouvoir être bloquée dans au moins deux positions, la première position étant une position de base et la deuxième position étant une position déployée, élargie par rapport à la position de base.

5. Voiture d'enfant ou de poupée selon la revendication 1, **caractérisée en ce que** lesdits au moins deux logements d'adaptateur (6) sont conçus de manière à pouvoir pivoter autour de l'axe longitudinal de ladite au moins une liaison transversale (2) réglable en longueur et/ou de manière à pouvoir coulisser le long de l'axe longitudinal de ladite au moins une liaison transversale (2) réglable en longueur.

6. Voiture d'enfant ou de poupée selon la revendication 5, **caractérisée en ce que** lesdits au moins deux logements d'adaptateur (6) sont conçus de manière à pouvoir être bloqués dans au moins deux positions de pivotement.

7. Voiture d'enfant ou de poupée selon la revendication 5, **caractérisée en ce que** lesdits au moins deux logements d'adaptateur (6) sont conçus de manière pivotante avec ladite au moins une liaison transversale (2) réglable en longueur.

8. Voiture pour enfant ou de poupée selon les revendications 3 et 5, **caractérisée en ce que** lesdits au moins deux logements d'adaptateur (6) sont aménagés de manière pivotante sur ladite au moins une liaison transversale (2) réglable en longueur, par l'intermédiaire d'au moins un guidage pivotant.

9. Voiture pour enfant ou de poupée selon les revendications 2 et 5, **caractérisée en ce que** lesdits au moins deux logements d'adaptateur (6) sont reliés au mécanisme en ciseaux (3), un mouvement de pivotement desdits au moins deux logements d'adaptateur (6) étant apte à être provoqué par le mécanisme en ciseaux (3).
